# EUROPEAN PATENT APPLICATION

(11) **EP 4 717 480 A1**
(43) Date of publication of application: **01.04.2026**
(21) Application number: 24203104.5
(22) Date of filing: 27.09.2024
(51) Int. Cl.: B60H 1/00

(54) **AN AUTOMOTIVE CONTROLLER**

(71) Applicant: NXP B.V., 5656 AG Eindhoven (NL)
(72) Inventor: Saracevic,, Omar, 5656 AG Eindhoven (NL); Gu tin,, Matja, 5656 AG Eindhoven (NL)
(74) Representative: Krott, Michel

(57) **Abstract**

An automotive controller for controlling a heating, ventilation and air conditioning, HVAC, system of a vehicle, the automotive controller configured to: receive radar data representing an internal cabin of the vehicle; process the radar data to identify an obstructed vent of the HVAC system; and output a control signal to the HVAC system for disabling the obstructed vent.

## Description

### Field

The present disclosure relates to an automotive controller and a method for controlling for controlling a heating, ventilation and air conditioning (HVAC) system of a vehicle.

### Summary

According to a first aspect of the present disclosure there is provided an automotive controller for controlling a heating, ventilation and air conditioning, HVAC, system of a vehicle, the automotive controller configured to:
receive radar data representing an internal cabin of the vehicle;
process the radar data to identify an obstructed vent of the HVAC system; and
output a control signal to the HVAC system for disabling the obstructed vent.

In one or more embodiments disabling the obstructed vent may comprise: reducing or disabling an air flow through the obstructed vent; deactivating a heating element associated with the obstructed vent; or disabling a cooling element associated with the obstructed vent; closing the obstructed vent or closing an input duct associated with the obstructed vent.

In one or more embodiments, the automotive controller may be configured to process the radar data to identify the obstructed vent by identifying an obstruction in an airflow path of the obstructed vent.

In one or more embodiments, the automotive controller may be configured to:
process the radar data to identify an obstruction in an airflow path of a vent as one of:
   a living obstruction; or
   an inanimate obstruction; and
   identify the vent as an obstructed vent if the obstruction is an inanimate obstruction.

In one or more embodiments, the automotive controller may identify the vent as an un-obstructed vent if the obstruction is a living obstruction.

In one or more embodiments, the radar data may comprise a plurality of radar datasets each captured at a different time. The automotive controller may be configured to identify the obstruction as a living obstruction by detecting breathing and/or relative motion of the obstruction.

In one or more embodiments, the radar data may comprise a plurality of radar datasets each captured at a different time and the automotive controller may be configured to:
process the radar data to identify an obstruction in an airflow path of a vent as one of:
a transient obstruction; or
a persistent obstruction; and

identify the vent as an obstructed vent if the obstruction is a persistent obstruction.

In one or more embodiments, the automotive controller may identify the vent as an un-obstructed vent if the obstruction is a transient obstruction.

In one or more embodiments, the radar data may comprise doppler radar data.

In one or more embodiments, the automotive controller may receive each radar data set periodically. The automotive controller may perform a transform on the plurality of radar datasets to detect object motion.

In one or more embodiments, the automotive controller may be configured to process the radar data to detect one or more of:
a hanging garment;
cargo positioned in the internal cabin;
a reclined seat; and
an object attached to a vent.

In one or more embodiments, the automotive controller may be configured to:
compare the radar data to reference radar data to determine a difference in the internal cabin; and
identify the obstructed vent based on the difference.

In one or more embodiments, the reference data may correspond to a radar data captured when the cabin was empty and free from obstructions.

In one or more embodiments, the automotive controller may be configured to:
process the radar data to identify a reflective tag signature of a reflective tag positioned in the internal cabin; and
identify the obstructed vent based on the presence or absence of the reflective tag signature.

In one or more embodiments, the automotive controller may identify a vent comprising the reflective tag as an obstructed vent if the reflective tag signature is reduced or absent from the radar data. The automotive controller may identify an obstruction as a living obstruction if the reflective tag signature corresponds to a breathing motion at a seatbelt position.

In one or more embodiments, the automotive controller may be configured to output the control signal to the HVAC system for one or more of:
increasing an airflow through one or more un-obstructed vents; and
redirecting an airflow through one or more un-obstructed vents toward an obstructed zone of the vehicle cabin.

In one or more embodiments, the automotive controller may be configured to output the control signal to perform one or more of:
reducing or disabling an air flow through the obstructed vent;
deactivating a heating element of the obstructed vent;
deactivating a cooling element of the obstructed vent;
closing the obstructed vent;
closing an input duct associated with the obstructed vent; or
outputting an alert signal to a user of the vehicle.

In one or more embodiments, the automotive controller may be configured to:
receive updated radar data representing the internal cabin of the vehicle;
process the updated radar data to identify that the obstructed vent has become an un-obstructed vent; and
re-enable the un-obstructed vent.

In one or more embodiments, the automotive controller may be configured to:
process the radar data to determine an occupancy of one or more seat positions in the internal cabin; and
output the control signal for disabling one or more vents directed towards one or more unoccupied seats.

According to a second aspect of the present disclosure there is provided a automotive control system comprising:
a radar; and
any automotive controller disclosed herein, wherein the automotive controller is configured to receive the radar data from the radar.

In one or more embodiments, the radar may comprise an ultrawideband radar; a 24 GHz radar or a 60 GHz radar.

According to a third aspect of the present disclosure, there is provided a method for controlling a heating, ventilation and air conditioning, HVAC, system of a vehicle, the method comprising:
receiving radar data representing an internal cabin of the vehicle;
processing the radar data to identify an obstructed vent of the HVAC system; and
outputting a control signal to the HVAC system for reducing an airflow through the obstructed vent.

According to a fourth aspect of the present disclosure, there is provided an apparatus comprising one or more processors configured to perform any method disclosed herein.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description in connection with the accompanying Drawings.

### Brief Description of the Drawings

One or more embodiments will now be described by way of example only with reference to the accompanying drawings in which:

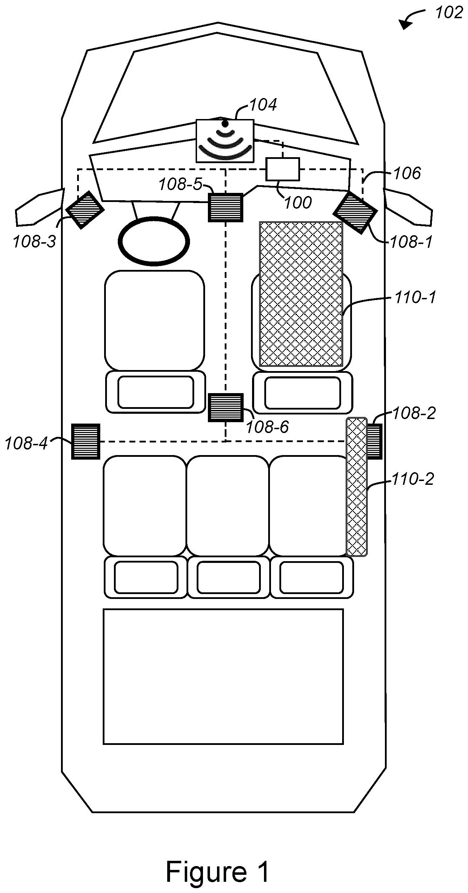

Figure 1 shows an example embodiment of an automotive controller for a vehicle.

### Detailed Description

Modern electric vehicles (EVs) provide Heating, Ventilation, and Air Conditioning (HVAC) functionality by consuming energy stored in the electric battery. Heating and cooling of the in-cabin environment is particularly energy demanding and, thus, reduces the driving range between battery charges, which is undesirable. For Internal Combustion Engine (ICE) heating is virtually free, but cooling also consumes a considerable amount of engine power, and thus fuel.

In some vehicles, a user can provide multiple manual inputs to set up the climate control in the vehicle for the current occupancy status and reduce it when willing to extend its range (some kind of "eco" mode). However, even when available, a user will often forego such a burdensome task.

The disclosed apparatus and methods can provide improved HVAC efficiency by using in-cabin radar data to detect obstructed vents and reducing an airflow through such obstructed vents. The improved HVAC efficiency can reduce HVAC energy consumption and thereby extend range, which is particularly advantageous for EVs. Disclosed examples can further improve HVAC efficiency by detecting, and reducing airflow towards, unoccupied seats.

Figure 1 illustrates an automotive controller 100 for a vehicle 102 according to an embodiment of the present disclosure.

In this example, the automotive controller 100 (which may be referred to herein as the controller 100) is communicatively coupled to an in-cabin radar 104 by a communication network 106. The in-cabin radar 104 may comprise a ultrawideband (UWB) radar, a 60 GHz radar or any other known in-cabin radar or a similar sensor for detecting proximity or occupation of space (e.g. infrared, ultrasonic or laser-based technologies). For example, the radar 104 may comprise existing radar sensors for child presence detection or seatbelt reminders. Although only a single radar antenna is illustrated, the radar 104 may comprise a plurality of antennas or a plurality of radar sensors distributed throughout the internal cabin. A plurality of antennas can enable monitoring of difficult to access areas such as footwells and also enable algorithms that process and combine radar results of multiple antennas to increase the quality of the overall output, such as increased accuracy in harder to reach areas. The communication network 106 may comprise known automotive communication network such as CAN bus or ethernet. The controller 100 is also coupled to a heating, ventilation and air conditioning (HVAC) system comprising a plurality of air vents 108-1, 108-2, 108-3, 108-4, 108-5, 108-6 (which may be referred to collectively as plurality of air vents 108 and may be referred to herein as air vents or simply vents) via the communication network 106. Although only six air vents are illustrated, it will be appreciated that there may be more or less air vents, including air vents in the footwells (not illustrated). The controller 100 may be coupled to the plurality of air vents 108 via an HVAC controller (not shown) of the HVAC system. In some examples, the controller 100 may perform the functionality of an HVAC controller.

The controller 100 receives radar data from the radar 104. The radar data represents an internal cabin of the vehicle 102. The controller 100 processes the radar data to identify one or more obstructed vents 108-1, 108-2 of the HVAC system. In response, the controller 100 outputs a control signal to the HVAC system to disable the one or more obstructed vents 108-1, 108-2.

As disclosed herein, disabling an obstructed vent may comprise: deactivating a heating element or disabling a cooling element associated with the obstructed vent; reducing or disabling an air flow through the obstructed vent; closing the obstructed vent or closing an input duct associated with the obstructed vent.

By disabling obstructed vents, the controller advantageously improves the energy efficiency of the HVAC system and thus the range of the vehicle 102.

The controller 100 can process the radar data to identify an obstructed vent in a number of ways. For example, the controller 100 may compare the radar data to reference radar data. The reference radar data may comprise radar data captured by the radar at a time when the cabin of the vehicle 102 was known to be empty. For example, the reference radar data may be captured overnight or as part of a calibration process during manufacture of the vehicle 102. The reference radar data may be stored in a memory (not illustrated). The controller 100 may determine differences between the radar data and the reference data and identify an obstructed vent based on the differences.

In addition, or alternatively, the controller 100 may receive reference location data which may define a position of the radar within the cabin and a position of each of the plurality of vents 108 within the cabin. The reference location data may also define a position of other vehicle objects such as an airflow path of each vent, a plurality of seats, seatbelts, doors, mirrors etc. The reference location data may also be stored in the memory.

The controller 100 may process the radar data, the reference data and/or the reference location data to identify an obstruction 110-1, 110-2 in an airflow of a respective vent 108-1, 108-2 to identify the vent 108-1, 108-2 as an obstructed vent. For example, the controller 100 may directly identify obstructions 110-1, 110-2 that are along a line of sight towards a respective vent location 108-1, 108-2 (e.g. as identified by the reference location data) and closer than the vent location 108-1, 108-2. In some examples, the controller 100 may first determine differences between the radar data and the reference data to determine candidate obstructions. The controller can then identify an air vent 108 as an obstructed vent 108-1, 108-2 if a candidate obstruction lies in an airflow path of the air vent.

In some examples, the controller 100 may process the radar data to identify reflective tag signatures arising from high reflectivity tags positioned within the internal cabin. The reflective tag can make an object more easily identifiable and have higher accuracy in the radar data. The reflective tags may comprise metal tags. In some examples, reflective tags may be positioned on each of the air vents 108. The controller 100 may identify that each of the plurality of air vents 108 is an unobstructed vent if a reflective tag signature is detected in the radar data at the location of each vent 108 (as identified by the reference location data). Conversely, the controller 100 may identify an air vent 108 as an obstructed vent 108-1, 108-2 if a reflective tag signature is absent or reduced at the air vent location.

Reflective tags may also be positioned on seatbelts or seats. The controller 100 may detect the presence or absence of corresponding reflective tag signatures to identify that the corresponding seat is occupied or not. For example, the controller 100 may identify a seat as occupied if a reflective tag positioned on the seat is occluded, and vice versa. As discussed below, the controller 100 can identify a passenger in a seat by identifying a breathing signature by detecting corresponding repetitive movement of the seatbelt reflective tag signature in the radar data.

In some examples, the controller 100 may monitor the airflow paths of the plurality of vents on a continuous or semi-continuous (e.g. periodic) fashion. In this way, the radar data can comprise a plurality of radar datasets each captured at a different time point. The controller 100 can detect the obstruction 110-1, 110-2 based on the appearance and/or movement of an object in the airflow path of one of the vents 108. For periodic monitoring, a radar dataset may be captured every 5, 10, 50 or 100 ms. Each dataset may comprise data in the fast time (one frame / time point) known as a channel impulse response (CIR) which can contain taps that represent reflections at specific distances. These frames can be sent and received every 5, 10, 50, 100 (etc) ms and stacked together. The taps along this dimension are known as the slow-time dimension. If multiple antennas / sensors are present a radar angle of arrival (elevation / azimuth) can also be computed. All of the dimensions can then provide a radar cube.

The controller 100 may stack the plurality of radar data sets and analyse the stack to detect object movement (e.g. by transforming the stack with a fast Fourier transform (FFT), a short time Fourier transform (STFT), a wavelet transform, along the slow time axis etc). The controller 100 may perform this periodic capturing and stacking of datasets, and subsequent object detection, in bursts. For example, the controller may capture, stack and analyse datasets every 10 ms for a burst period of say 5 seconds. The controller 100 may then repeat this process periodically at a burst interval, e.g. 30 seconds. In this way, the controller 100 can reduce power consumption.

In some examples, the controller 100 may detect such object movement to identify the appearance of an obstruction in an airflow path of a vent. In some examples, the controller 100 may detect object movement to identify that an obstruction is a living obstruction (i.e. a passenger). In some examples, the radar may comprise a Doppler radar to achieve the same motion detection capability and resolution.

More generally, in some examples, the controller 100 can process the radar data to identify the obstruction 110-1, 110-2 in an airflow path of a vent 108-1, 108-2 as one of: (i) a living obstruction (i.e. a passenger or animal); or (ii) an inanimate obstruction (e.g. cargo).

In some examples, the controller 100 can identify the obstruction as a living obstruction based on the object motion detection described above. For example, the controller 100 can identify the obstruction as a living obstruction if the object motion corresponds to a shifting of the object in a seat and/or a repetitive breathing motion.

In some examples, the controller 100 may identify the object as a living object (passenger) by detecting an engaged seatbelt signature in the radar data. In some examples, the controller 100 may detect a seatbelt reflective tag signature corresponding to a reflective tag applied to a seatbelt and thereby identify the seatbelt is engaged and that the object corresponds to a passenger seated in the seat. The controller 100 can also detect the motion of such reflective tag signatures to detect a repetitive breathing signature and thereby a living object.

In some examples, the controller 100 may determine the presence of a passenger or a living object by processing ranging data associated with the radar data. The ranging data may comprise ranging information communicated from the radar 104 (e.g. a UWB radar sensor) to and from a smart device (smart phone, wearable etc) of a user of the vehicle 102. The ranging data may include a distance and angle of the smart device from an antenna of the radar 104. If the smart device is located at a seat position, the controller 100 may determine the presence of a passenger in the seat.

In some examples, the controller 100 may determine the presence of a passenger using an object recognition algorithm that can identify the shape of a human.

If the controller 100 identifies an obstruction 110-1, 110-2 as a living object, the controller may determine the respective vent 108-1, 108-2 as an unobstructed vent. This is because the vent 108 is performing its intended function of providing HVAC airflow to the passenger.

If the controller 100 does not identify an obstruction as a living obstruction, e.g. due to an absence of motion or absence of a seatbelt, it may determine the obstruction to be an inanimate obstruction. The controller 100 may identify the obstruction as an inanimate obstruction if no motion is detected over a threshold time period. If the controller 100 identifies an obstruction 110-1 in an airflow path of a vent 108-1 as an inanimate obstruction, the controller 100 may disable the vent 108-1.

In the example of Figure 1, the controller 100 may process the radar data to identify a first obstruction 110-1 positioned in an airflow path of a first vent 108-1. The controller 100 may identify that the first obstruction 110-1 is in the airflow path based on the reference location data identifying the air flow path of the first air vent 108-1. As described above, the radar data may comprise a plurality of radar datasets, each captured at a different time, enabling the controller 100 to perform motion detection on the radar data as described above. The controller 100 may identify the first obstruction 110-1 as an inanimate obstruction (e.g. a large piece of cargo - suitcase, parcel etc) if no motion is detected in the radar data. The controller 100 can then identify the first air vent 108-1 as an obstructed air vent 108-1 and output the control signal to disable the first vent 108-1.

In a similar manner, the controller 100 can also process the radar data to identify a hanging garment 110-2 in the rear of the cabin as an inanimate obstruction, identify a second air vent 108-2 as an obstructed air vent 108-2 and disable the second air vent 108-2.

The controller 100 may process the radar data to determine an inanimate object comprising one or more of: a box or baggage positioned in a footwell, on a seat or leaning against a vent; a hanging garment covering a vent; a reclined, collapsed or repositioned seat blocking a vent; or an object attached to a vent (e.g. a smart phone or sat nav holder).

In some examples, in which the radar data comprises a plurality of radar datasets each captured at a different time, the controller 100 can process the radar data to identify an obstruction 110-1, 110-2, in an airflow path of an air vent 108 as one of: (i) a transient obstruction; or (ii) a persistent obstruction. The controller 100 can identify the air vent 108 as an obstructed vent 108-1, 108-2 if the obstruction is a persistent obstruction. The controller 100 can identify the obstruction 110-1, 110-2 as a persistent obstruction if the obstruction 110-1, 110-2 persists in the airflow path of the air vent 108-1, 108-2 for a persistence time threshold. The cargo 110-1 and hanging garment 110-2 of Figure 1 are examples of a persistent obstruction. The controller 100 can identify the obstruction 110-1, 110-2 as a transient obstruction if the obstruction moves out of the airflow path or disappears during the persistence time threshold. Examples of a transient obstruction may include passenger limb movement as they reach across the cabin or alight the vehicle. The controller 100 may identify the vent 108 as an unobstructed vent if the obstruction is a transient obstruction.

In some examples, the controller 100 may output the control signal to the HVAC system for changing the airflow through one or more unobstructed vents 108-3, 108-4, 108-5, 108-6 to compensate for the effect of disabling the obstructed vents 108-1, 108-2. For example, the controller 100 may increase an airflow through one or more unobstructed vents 108-3, 108-4, 108-5, 108-6. In the example of Figure 1, the controller 100 may increase the airflow through a fourth air vent 108-4 and a sixth air vent 108-6 to compensate for the lack of airflow through the obstructed second air vent 108-2. In some examples, the controller 100 may at least partially redirect an airflow of one or more unobstructed vents 108-3, 108-4, 108-5, 108-6 towards the in-cabin zone (an obstructed zone) which is currently not receiving any air flow due to obstructed and now disabled air vents. In the example of Figure 1, the controller 100 may redirect the air flow of the sixth air vent 108-6 at least partially towards the right most rear passenger seat to compensate for the obstructed and disabled second air vent 108-2.

In some examples, the controller 100 may receive updated radar data representing the in-car cabin at a later time. The controller 100 may process the updated radar data and identify that a previously obstructed vent 108-1, 108-2 is no longer obstructed and has become an un-obstructed vent. The controller 100 may output an updated control signal to re-enable the un-obstructed vent. For the example of Figure 1, the first obstruction 110-1 may be delivered to a destination and disappear from the cabin. The controller 100 may detect the disappearance of the first obstruction 110-1, identify that the previously obstructed first air vent 108-1 has become an unobstructed vent and output a control signal to the HVAC system to re-enable the first air vent 108-1.

In some examples, the controller 100 may process the radar data to determine an occupancy of one or more seat positions in the internal cabin. In other words, the controller 100 can process the radar data to determine whether each seat in the cabin is occupied (by a passenger) or unoccupied. The controller 100 may output the control signal to the HVAC system to disable one or more vents 108 that are directed towards an unoccupied seat.

In this way, the controller 100 can further reduce the power drain of the HVAC system by selectively avoiding to service (heat, cool, ventilate) the seats that are not occupied by any passenger or animal.

In the same way as described above, the detection of seat occupancy can be performed using one or more of: in-cabin radar 104, ranging tags in the form of user smart devices, and reflective tags on seatbelts or seats.

The controller 100 may perform the following functions in response to detecting an unoccupied seat:
1. The controller 100 may disable an air vent 108 with an airflow directed towards the unoccupied seat if the airflow vent is unable to be reoriented towards an occupied seat.
2. The controller 100 may inhibit a seat heating functionality for the unoccupied seat. This can be especially useful for global seat-heating on-off switches, without a per-seat on-off option.
3. If stronger cooling/heating is requested by a seat occupant, the controller 100 may re-orient the airflow vents 108 of nearby unoccupied seats towards the occupied seat. Consequently, the air flow for all the active vents might be reduced saving power.

In some examples, the controller may output the control signal for controlling the HVAC system to perform a number of functions. Following disabling of one or more obstructed air vents 108-1, 108-2, and/or one or more air vents 108 directed towards unoccupied seats, the controller 100 can control the HVAC system serving only parts of the vehicle and reduce its power consumption. For example:
1. The controller 100 may output the control signal to control a heat pump. A heat pump is often used for cooling and also heating, especially in EVs, and can run at variable power. The controller 100 may output the control signal to reduce the power of the heat pump based on the number of disabled vents.
2. The controller 100 may output the control signal to disable or reduce the power / current to a resistive or infrared heater of the HVAC system. The controller may output the control signal to deactivate or reduce the power to individual heating elements of each disabled air vent.
3. The controller 100 may output the control signal to reduce a speed of a central HVAC fan based on the number of disabled air vents. The central HVAC fan can distribute airflow across all vents in the cabin. If the airflow is focussed on a limited number of vents or seats, the fan may run at lower speeds. In vehicles equipped with fans for each air vent, the controller 100 may output the control signal to disable the fans of disabled vents.
4. The controller 100 may output an alert signal to a user interface of the vehicle warning that a vent 108-1, 108-2 is obstructed. The controller 100 may output the alert signal prior to disabling the obstructed vent to provide an opportunity for the user to move the obstruction.

The disclosed HVAC control and resulting energy-saving functionality can advantageously increase the driving range of the vehicle more often (even if the user forgets about the HVAC) and reduce the amount of manual input from the user to set up the system for the current state of cabin occupancy (thus providing automated comfort and energy saving). The controller can advantageously result in higher EV battery range (or reduced fuel consumption in ICE vehicles) as the HVAC power is focused only on areas of interest.

The instructions and/or flowchart steps in the above figures can be executed in any order, unless a specific order is explicitly stated. Also, those skilled in the art will recognize that while one example set of instructions/method has been discussed, the material in this specification can be combined in a variety of ways to yield other examples as well, and are to be understood within a context provided by this detailed description.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

It will be appreciated that any components said to be coupled may be coupled or connected either directly or indirectly. In the case of indirect coupling, additional components may be located between the two components that are said to be coupled.

In this specification, example embodiments have been presented in terms of a selected set of details. However, a person of ordinary skill in the art would understand that many other example embodiments may be practiced which include a different selected set of these details. It is intended that the following claims cover all possible example embodiments.

## Claims

1. An automotive controller for controlling a heating, ventilation and air conditioning, HVAC, system of a vehicle, the automotive controller configured to:
receive radar data representing an internal cabin of the vehicle;
process the radar data to identify an obstructed vent of the HVAC system; and
output a control signal to the HVAC system for disabling the obstructed vent.

2. The automotive controller of claim 1, wherein the automotive controller is configured to process the radar data to identify the obstructed vent by identifying an obstruction in an airflow path of the obstructed vent.

3. The automotive controller of claim 1 or claim 2, wherein the automotive controller is configured to:
process the radar data to identify an obstruction in an airflow path of a vent as one of:
a living obstruction; or
an inanimate obstruction; and
identify the vent as an obstructed vent if the obstruction is an inanimate obstruction.

4. The automotive controller of claim 2, wherein the radar data comprises a plurality of radar datasets each captured at a different time and the automotive controller is configured to identify the obstruction as a living obstruction by detecting breathing and/or relative motion of the obstruction.

5. The automotive controller of any preceding claim, wherein the radar data comprises a plurality of radar datasets each captured at a different time and the automotive controller is configured to:
process the radar data to identify an obstruction in an airflow path of a vent as one of:
a transient obstruction; or
a persistent obstruction; and
identify the vent as an obstructed vent if the obstruction is a persistent obstruction.

6. The automotive controller of any preceding claim, wherein the automotive controller is configured to:
compare the radar data to reference radar data to determine a difference in the internal cabin; and
identify the obstructed vent based on the difference.

7. The automotive controller of any preceding claim, wherein the automotive controller is configured to:
process the radar data to identify a reflective tag signature of a reflective tag positioned in the internal cabin; and
identify the obstructed vent based on the presence or absence of the reflective tag signature.

8. The automotive controller of any preceding claim, wherein the automotive controller is configured to output the control signal to the HVAC system for one or more of:
increasing an airflow through one or more un-obstructed vents; and
redirecting an airflow through one or more un-obstructed vents toward an obstructed zone of the vehicle cabin.

9. The automotive controller of any preceding claim, wherein the automotive controller is configured to output the control signal to perform one or more of:
reducing or disabling an air flow through the obstructed vent;
deactivating a heating element of the obstructed vent;
deactivating a cooling element of the obstructed vent;
closing the obstructed vent;
closing an input duct associated with the obstructed vent; or
outputting an alert signal to a user of the vehicle.

10. The automotive controller of any preceding claim, wherein the automotive controller is configured to:
receive updated radar data representing the internal cabin of the vehicle;
process the updated radar data to identify that the obstructed vent has become an un-obstructed vent; and
re-enable the un-obstructed vent.

11. The automotive controller of any preceding claim, wherein the automotive controller is configured to:
process the radar data to determine an occupancy of one or more seat positions in the internal cabin; and
output the control signal for disabling one or more vents directed towards one or more unoccupied seats.

12. A automotive control system comprising:
a radar; and
the automotive controller of any preceding claim, wherein the automotive controller is configured to receive the radar data from the radar.

13. The automotive control system of claim 11, wherein the radar comprises an ultrawideband radar; a 24 GHz radar or a 60 GHz radar.

14. A method for controlling a heating, ventilation and air conditioning, HVAC, system of a vehicle, the method comprising:
receiving radar data representing an internal cabin of the vehicle;
processing the radar data to identify an obstructed vent of the HVAC system; and
outputting a control signal to the HVAC system for reducing an airflow through the obstructed vent.

15. An apparatus comprising one or more processors configured to perform the method of claim 14.

## Amended claims

### Amended claims in accordance with Rule 137(2) EPC.

1. An automotive controller (100) for controlling a heating, ventilation and air conditioning, HVAC, system of a vehicle (102), the automotive controller (100) configured to:
receive radar data representing an internal cabin of the vehicle (102);
process the radar data to identify an obstructed vent (108) of the HVAC system; and
output a control signal to the HVAC system for disabling the obstructed vent (108).

2. The automotive controller (100) of claim 1, wherein the automotive controller (100) is configured to process the radar data to identify the obstructed vent (108) by identifying an obstruction (110) in an airflow path of the obstructed vent (108).

3. The automotive controller (100) of claim 1 or claim 2, wherein the automotive controller (100) is configured to:
process the radar data to identify an obstruction (110) in an airflow path of a vent as one of:
a living obstruction; or
an inanimate obstruction; and
identify the vent as an obstructed vent (108) if the obstruction is an inanimate obstruction.

4. The automotive controller (100 of claim 2, wherein the radar data comprises a plurality of radar datasets each captured at a different time and the automotive controller (100) is configured to identify the obstruction as a living obstruction by detecting breathing and/or relative motion of the obstruction (110).

5. The automotive controller (100) of any preceding claim, wherein the radar data comprises a plurality of radar datasets each captured at a different time and the automotive controller (100) is configured to:
process the radar data to identify an obstruction (110) in an airflow path of a vent as one of:
a transient obstruction; or
a persistent obstruction; and
identify the vent as an obstructed vent (108) if the obstruction (110) is a persistent obstruction.

6. The automotive controller (100) of any preceding claim, wherein the automotive controller (100) is configured to:
compare the radar data to reference radar data to determine a difference in the internal cabin; and
identify the obstructed vent (108) based on the difference.

7. The automotive controller (100) of any preceding claim, wherein the automotive controller (100) is configured to:
process the radar data to identify a reflective tag signature of a reflective tag positioned in the internal cabin; and
identify the obstructed vent (108) based on the presence or absence of the reflective tag signature.

8. The automotive controller (100) of any preceding claim, wherein the automotive controller (100) is configured to output the control signal to the HVAC system for one or more of:
increasing an airflow through one or more un-obstructed vents; and
redirecting an airflow through one or more un-obstructed vents toward an obstructed zone of the vehicle cabin.

9. The automotive controller (100) of any preceding claim, wherein the automotive controller (100) is configured to output the control signal to perform one or more of:
reducing or disabling an air flow through the obstructed vent (108);
deactivating a heating element of the obstructed vent (108);
deactivating a cooling element of the obstructed vent (108);
closing the obstructed vent (108);
closing an input duct associated with the obstructed vent (108); or
outputting an alert signal to a user of the vehicle (102).

10. The automotive controller (100) of any preceding claim, wherein the automotive controller (100) is configured to:
receive updated radar data representing the internal cabin of the vehicle (102);
process the updated radar data to identify that the obstructed vent (108) has become an un-obstructed vent; and
re-enable the un-obstructed vent.

11. A automotive control system comprising:
a radar; and
the automotive controller (100) of any preceding claim, wherein the automotive controller (100) is configured to receive the radar data from the radar.

12. The automotive control system of claim 11, wherein the radar comprises an ultrawideband radar; a 24 GHz radar or a 60 GHz radar.

13. A method for controlling a heating, ventilation and air conditioning, HVAC, system of a vehicle (102), the method comprising:
receiving radar data representing an internal cabin of the vehicle (102);
processing the radar data to identify an obstructed vent (108) of the HVAC system; and
outputting a control signal to the HVAC system for reducing an airflow through the obstructed vent (108).
